# EUROPEAN PATENT APPLICATION

(11) **EP 4 318 654 A1**
(43) Date of publication of application: **07.02.2024**
(21) Application number: 22857772.2
(22) Date of filing: 16.08.2022
(51) Int. Cl.: H01M 4/36, H01M 4/38, H01M 10/0525, C01B 32/05

(54) **NEGATIVE ELECTRODE COMPOSITE MATERIAL, AND PREPARATION METHOD THEREFOR AND APPLICATION THEREOF**

(30) Priority: 18.08.2021 CN 202110949130
(71) Applicant: SVOLT ENERGY TECHNOLOGY CO., LTD, Changzhou, Jiangsu 213200 (CN)
(72) Inventor: ZHANG, Yafei, hangzhou, Jiangsu 213200 (CN)
(74) Representative: Groth & Co. KB
(86) International application number: PCT/CN2022/112679
(87) International publication number: WO 2023/020460

(57) **Abstract**

A silicon-based negative electrode composite material. Zinc and tin are doped in a silicon-based negative electrode material. The presence of a tin and zinc alloy improves the conductivity of the silicon-based material, and a coated carbon shell has pores, facilitating the infiltration of an electrolyte while improving the ionic conductivity and electronic conductivity of the material, so that the rate performance of the composite material is enhanced.

## Description

### TECHNICAL FIELD

The present disclosure relates to the field of lithium-ion batteries, for example, relates to a negative electrode composite material, a preparation method and an application therefor.

### BACKGROUND

Lithium-ion secondary batteries have advantages such as high specific energy, long cycle life and stable discharge performance, etc. In recent years, in order to solve the problems of environmental pollution and depletion of fossil fuel reserves, the research and development of electric vehicles (EVs) has become more important than ever. Making these new energy vehicles a reality mainly depends on appropriate energy storage systems, and currently, efficient lithium-ion batteries can be applied in this area. However, nowadays these battery products cannot fully meet the usage requirements of electric vehicles, so finding electrode materials with low cost, strong cycling, better safety, and higher environmental compatibility is currently a top priority.

Silicon is a common element often found in dust, gravel and rocks in the form of complex silicates or silica. Silicon has abundant reserves and low costs. In the earth's crust, silicon is the second most abundant element, accounting for 26.4% of the total mass of the earth's crust. The theoretical specific capacity of silicon can reach 4200 mAh/g, which is more than ten times of that of graphite negative electrode materials. Moreover, the working voltage of silicon is higher than 0.2 V, whose safety is better than that of graphite negative electrodes, without the risk of lithium precipitation. Elementary substance silicon can be used as a lithium-ion battery negative electrode material, but volume expansion and contraction of silicon materials during charging and discharging vary greatly, and the huge volume effect can easily cause particle breakage, separation from the electrode plate, and SEI film thickening, which seriously affects the electrochemical performance and structural stability of negative electrode materials.

### SUMMARY

The present disclosure provides a negative electrode composite material, a preparation method and an application therefor. In the present disclosure, the silicon-based negative electrode material is doped with zinc and tin. The presence of tin and zinc alloys improves the conductivity of the silicon-based material. The coated carbon shell has pores, which is conducive to the infiltration of the electrolyte. At the same time, the ion conductivity and electronic conductivity of the material are improved, thereby enhancing the rate performance of the composite material.

The present disclosure provides a method for preparing a negative electrode composite material in an embodiment, which comprises the following steps:
(1) mixing and dissolving a first carbon source and a first dispersant, and preparing carbon balls through a spray drying treatment;
(2) mixing a tin source, a zinc source and a solvent, coating the tin source and the zinc source onto carbon balls through a primary liquid phase coating treatment, and obtaining hollow spherical tin oxide/zinc oxide composite material after an oxidation-sintering treatment;
(3) mixing and dissolving a second carbon source and a second dispersant, forming a carbon layer on the surface of the tin oxide/zinc oxide composite material through a secondary liquid phase coating treatment, and obtaining a precursor material after a reduction-sintering treatment;
(4) introducing a silicon source, depositing silicon into the interior of the precursor obtained in step (3), and obtaining the negative electrode composite material.

The present disclosure adopts technologies such as spray drying, liquid phase coating, gas phase reduction and the likes to synthesize spherical Si/C/Sn/Zn composite materials. On the basis of the existing silicon-based negative electrode materials, this material enhances structural stability, alleviates volume expansion, and improves the cycle stability of materials; Si/C/Sn/Zn elements are uniformly mixed to construct a symmetrical conductive structure, thereby improving the conductivity and rate performance of silicon-based materials, and obtaining lithium-ion battery negative electrode materials with fast charging capacity. Moreover, the present disclosure can alleviate the volume effect of silicon-based materials, minimize the exposure degree of silicon surfaces, thereby reducing irreversible capacity loss, and at the same time, reduce the erosion of electrode materials by HF generated by the electrolyte, suppress side reactions generated at the interface, and form the optimal SEI film, thereby improving the material's cycling performance and rate performance.

The present disclosure adopts the mechanism of synthesizing MOFs materials: using Sn and Zn elements as seeds and using silane as silicon source, simultaneously depositing Si inside and outside the spherical Sn, Zn, and C composite materials, and obtaining the final spherical Si, C, Sn, and Zn composite negative electrode material.

In one embodiment, the first carbon source described in step (1) comprises any one or a combination of at least two of glucose, sucrose, maltose, fructose and citric acid.

In one embodiment, the first dispersant comprises any one or a combination of at least two of polyethylene pyrrolidone, polyether P123 and polyether F 127.

In an embodiment, a molar amount of the first dispersant is in a range from 2% to 4% of a molar amount of the first carbon source, such as 2%, 2.5%, 3%, 3.5%, or 4%, etc.

In an embodiment, the first carbon source after the mixing and dissolving has a solid content ranging from 30% to 50%, such as 30%, 35%, 40%, 45%, or 50%, etc.

In one embodiment, the carbon balls have a median particle size ranging from 4 µm to 6 µm. For example: 4 µm, 4.5 µm, 5 µm, 5.5 µm, or 6 µm, etc.

In an embodiment, the tin source described in step (2) comprises any one or a combination of at least two of tin(II) oxalate, tin(IV) nitrate, tin(II) methanesulfonate and tin(II) ethanesulfonate.

In one embodiment, the zinc source comprises any one or a combination of at least two of zinc nitrate, zinc carbonate and zinc oxalate.

In an embodiment, a molar ratio of the zinc source to the tin source is (0.8-1.2): (0.8-1.2), such as 0.8:0.9, 0.8:1, 0.8:1.2, 1:1, 0.9:1, 1:1.2, or 1.2:1, etc.

In an embodiment, the total molar amount of the zinc source and the tin source is in a range from 15% to 25% of the molar amount of the carbon balls, such as 15%, 18%, 20%, 22%, or 25%, etc.

In one embodiment, the oxidation-sintering described in step (2) is carried out under an oxygen atmosphere.

In an embodiment, the temperature for the oxidation-sintering is in a range from 360°C to 380°C, such as 360°C, 365°C, 370°C, 375°C, or 380°C, etc.

In one embodiment, the time for the oxidation-sintering is in a range from 3 hours to 5 hours, such as 3 hours, 3.5 hours, 4 hours, 4.5 hours, or 5 hours, etc.

In one embodiment, the tin oxide/zinc oxide composite material has a thickness ranging from 1.5µm to 2.5 µm, such as 1.5 µm, 1.8 µm, 2 µm, 2.2 µm, or 2.5 µm, etc.

In one embodiment, the second carbon source described in step (3) comprises any one or a combination of at least two of glucose, sucrose, maltose, fructose and citric acid.

In one embodiment, the second dispersant comprises any one or a combination of at least two of polyethylene pyrrolidone, polyether P123 and polyether F127.

In one embodiment, the carbon layer has a thickness ranging from 1.5µm to 2.5 µm, such as 1.5 µm, 1.8 µm, 2 µm, 2.2 µm, or 2.5 µm, etc.

In one embodiment, the reduction-sintering described in step (3) is carried out under a reducing atmosphere.

In one embodiment, the gas in the reducing atmosphere comprises hydrogen gas.

In one embodiment, the gas in the reducing atmosphere also comprises inert gas.

In an embodiment, the reduction-sintering is carried out at a temperature ranging from 640°C to 660°C, such as 640°C, 645°C, 650°C, 655°C, or 660°C, etc.

In one embodiment, the reduction-sintering is carried out for a period time ranging from 3 hours to 5 hours, such as 3 hours, 3.5 hours, 4 hours, 4.5 hours, or 5 hours, etc.

The present disclosure uses hydrogen gas to reduce tin oxide and zinc oxide. At the same time, hydrogen gas and oxygen atoms generate water vapor. When water vapor evaporates, pores are formed on the carbon shell. The melting point of tin is 231.89°C, and the melting point of zinc is 419.53°C. Additionally, argon gas protects the carbon layer from oxidation. After the melting of tin and zinc, there is space left inside the porous carbon shell.

In one embodiment, the silicon source in step (4) comprises silane.

In one embodiment, the introducing of the silicon source is carried out at a rate ranging from 3 ml/s to 5 ml/s, such as 3ml/s, 3.5ml/s, 4ml/s, 4.5ml/s, or 5ml/s, etc.

In an embodiment, the temperature at which the silicon source is introduced is in a range from 800°C to 850°C, such as 800°C, 810°C, 820°C, 830°C, 840°C, or 850°C, etc.

In one embodiment, the time for introducing the silicon source is in a range from 15 hours to 25 hours, such as 15 hours, 18 hours, 20 hours, 22 hours, or 25 hours, etc.

In an embodiment, the present disclosure provides a negative electrode composite material, which is prepared by the above method. The negative electrode composite material comprises a tin/zinc composite material with a hollow structure, a carbon shell coated on the surface of the tin/zinc composite material, and silicon which is fully grown on the tin/zinc composite material but does not fully fill the entire tin/zinc composite material.

The interior of the composite material disclosed in the present disclosure comprises Sn, Zn, and Si composite materials, and there are voids to alleviate the volume expansion of the silicon-based material. The unique MOF-like structure makes its pore size larger, thereby improving the ion conductivity and electronic conductivity of the battery material. The exterior is uniformly coated with carbon material, which improves the overall cycling stability.

In an embodiment, the present disclosure provides a negative electrode plate, which comprises the above-mentioned negative electrode composite material.

In an embodiment, the present disclosure provides a lithium-ion battery, which comprises the above-mentioned negative electrode plate.

### BRIEF DESCRIPTION OF THE DRAWINGS

The accompanying drawing is used to provide a further understanding of the technical solutions herein, and constitutes a part of the specification. The accompanying drawing is used together with the examples of the present application to explain the technical solution of the present application and do not constitute a limitation on the technical solution herein.

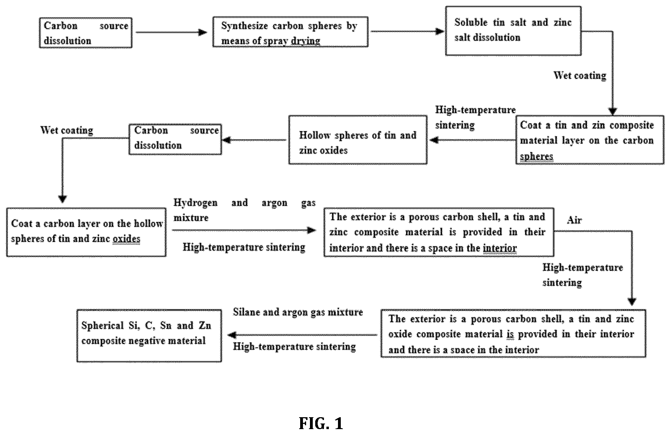

FIG. 1 is a flow chart of the preparation process of the negative electrode composite material according to an embodiment of the present disclosure.

### DETAILED DESCRIPTION

### EXAMPLE 1

This example provides a negative electrode composite material, and the method for preparing the negative electrode composite material is as follows:
(1) Ultrapure water was used to dissolve sucrose and citric acid as carbon sources in a beaker at a ratio of 1:1 with a solid content of 30%. At the same time, P123 was added as a dispersant, and the molar amount of the added dispersant accounted for 2% of the amount of the total carbon sources. The beaker was placed on a magnetic stirrer, and maintained at a constant temperature of 45°C, stirring at a rate of 300 rpm for 1 hour. Then the obtained substance was dried by a spray dryer under certain conditions (the atomizer rate was 30,000 rpm, the peristaltic pump rate was 15 mL/min, and the inlet and outlet temperatures of the atomizing chamber were 110°C and 180°C respectively) to obtain carbon spheres with D50 of 5 µm;
(2) Through the process of wet coating, tin(II) oxalate and zinc nitrate were mixed in a molar ratio of 1:1 and dissolved in anhydrous ethanol. The solid content was controlled at 20%, and the molar ratio of the total addition amount accounted for 15% of the total molar amount of the carbon balls. A beaker containing salt solution was placed on a magnetic stirrer, kept at a constant temperature of 45°C, and stirred at a rate of 300 rpm for 1 hour. Then an ultrasonic cleaning machine was used at a frequency of 60Hz for 30 minutes to ensure uniform mixing of tin and zinc. At this point, the previously synthesized carbon balls were added to the mixed solution, kept at a constant temperature of 45°C, and stirred at a rate of 400 rpm until anhydrous ethanol completely evaporated. Carbon balls coated with tin and zinc were placed in a tubular sintering furnace in an oxygen atmosphere, the airflow rate was controlled to 3ml/s, the temperature was controlled to 360°C and kept for 3 hours, the rate of the tubular sintering furnace was set to 5 rpm, and hollow spherical structure composite materials with mixed tin oxide/zinc oxide and a thickness of about 2 µm was obtained;
(3) Citric acid and other materials were used as carbon coating layers. By using the wet coating process, a carbon layer with a thickness of about 2µm was coated on the surface of the tin oxide/zinc oxide mixed hollow spheres. A double-layer spherical material was placed in a tubular sintering furnace, the rate of the tubular sintering furnace was set to 5 rpm, and the airflow rate was controlled to 3 ml/s in hydrogen and argon mixed gas atmosphere. Firstly, it was kept at a temperature of 300°C for 2 hours, and then the temperature was increased to 640°C and maintained at the temperature for 3 hours. Hydrogen gas was used to reduce tin oxide and zinc oxide to obtain a precursor material;
(4) Argon gas was introduced, the flow rate was controlled to 3 ml/s, the temperature was increased to 800°C, and the flow rate of argon gas was changed to 1 ml/s. At the same time, silane gas such as methylsilane was introduced, the flow rate of silane gas was controlled to 3 ml/s, and the temperature was kept for 15 hours. Silicon was allowed to fully grow on the tin/zinc composite material without completely filling the entire carbon shell interior, to obtain a negative electrode composite material.

The flowchart of the preparation process of the negative electrode composite material was shown in FIG. 1.

### EXAMPLE 2

This embodiment provides a negative electrode composite material, and the method for preparing the negative electrode composite material is as follows:
(1) Ultrapure water was used to dissolve sucrose and maltose as carbon sources in a beaker at a ratio of 1:1 with a solid content of 40%. At the same time, polyvinylpyrrolidone was added as a dispersant, and the molar amount of the added dispersant added accounted for 3% of the amount of the total carbon source. The beaker was placed on a magnetic stirrer, and maintained at a constant temperature of 50°C, stirring at a rate of 400 rpm for 1 hour. Then the obtained substance was dried by a spray dryer under certain conditions (the atomizer rate was 30,000 rpm, the peristaltic pump rate was 15 mL/min, and the inlet and outlet temperatures of the atomizing chamber were 110°C and 180°C respectively) to obtain carbon spheres with D₅₀ of 5 µm;
(2) Through the process of wet coating, tin(II) nitrate and zinc oxalate were mixed in a molar ratio of 1:1 and dissolved in anhydrous ethanol. The solid content was controlled at 25%, and the molar ratio of the total addition amount accounted for 15% of the total molar mass of the carbon balls. A beaker containing salt solution was placed on a magnetic stirrer, kept at a constant temperature of 45°C, and stirred at a rate of 300 rpm for 1 hour. Then an ultrasonic cleaning machine was used at a frequency of 60Hz for 30 minutes to ensure uniform mixing of tin and zinc. At this point, the previously synthesized carbon balls were added to the mixed solution, kept at a constant temperature of 45°C, and stirred at a rate of 400 rpm until anhydrous ethanol completely evaporated. Carbon balls coated with tin and zinc were placed in a tubular sintering furnace in an oxygen atmosphere, the airflow rate was controlled to 3ml/s, the temperature was controlled to 360°C and kept for 3 hours, the rate of the tubular sintering furnace was set to 5 rpm, and hollow spherical structure composite materials with mixed tin oxide/zinc oxide and a thickness of about 2 µm was obtained;
(3) Citric acid and other materials were used as carbon coating layers. By using the wet coating process, a carbon layer with a thickness of about 2µm is coated on the surface of the tin oxide/zinc oxide mixed hollow sphere. A double-layer spherical material was placed in a tubular sintering furnace, the rate of the tubular sintering furnace was set to 5 rpm, and the airflow rate was controlled to 3 ml/s in a hydrogen and argon mixed gas atmosphere. First, it was kept at a temperature of 300°C for 2 hours, and then the temperature was increased to 650°C for 3 hours. Hydrogen gas was used to reduce tin oxide and zinc oxide to obtain precursor materials;
(4) Argon gas was introduced, the flow rate was controlled to 3 ml/s, the temperature was increased to 825°C, and the flow rate of argon gas was changed to 1 ml/s. At the same time, silane gas such as methylsilane was introduced, the flow rate of silane gas was controlled to 3 ml/s, and the temperature was kept for 20 hours. Silicon was allowed to fully grow on the tin/zinc composite material without completely filling the entire carbon shell interior, to obtain the negative electrode composite material.

### EXAMPLE 3

The only difference between Example 3 and Example 1 is that the molar ratio of tin(II) oxalate to zinc nitrate in Step (2) is 0.5:1, and other conditions and parameters are completely the same as that of Example 1.

### EXAMPLE 4

The only difference between Example 4 and Example 1 is that the molar ratio of tin(II) oxalate to zinc nitrate in Step (2) is 2: 1, and other conditions and parameters are completely the same as Example 1.

### EXAMPLE 5

The only difference between Example 5 and Example 1 is that the sintering temperature in Step (3) is 620°C, and other conditions and parameters are completely the same as that of Example 1.

### EXAMPLE 6

The only difference between Example 6 and Example 1 is that the sintering temperature in Step (3) is 680°C, and other conditions and parameters are completely the same as Example 1.

### COMPARATIVE EXAMPLE 1

Traditional silicon carbon materials were used in the Comparative Example 1.

### Testing of Performance

The negative electrode materials obtained from Examples 1-6 and Comparative Example 1 were assembled into a button battery in a glove box, the slurry ratio and coating thickness were controlled to be the same, and then the electrochemical performance were tested using a blue electric testing system and a Princeton electrochemical workstation. The test results are shown in Table 1:

**Table 1**

| | First charge specific capacity (mAh·g⁻¹) | First discharge specific capacity (mAh·g⁻¹) | Capacity retention rate for 100 cycles at room temperature and 0.1C (%) | Capacity retention rate for 100 cycles at 45 °C and 0.1C (%) | Discharge specific capacity at room temperature and 1C (mAh·g⁻¹) |
|---|---|---|---|---|---|
| Example 1 | 454.89 | 494.1 | 64.84 | 62.53 | 214.82 |
| Example 2 | 455.2 | 496.1 | 63.2 | 63.5 | 215.1 |
| Example 3 | 452.6 | 489.6 | 60.3 | 59.6 | 208.2 |
| Example 4 | 453 | 488.6 | 59.2 | 58.6 | 209.7 |
| Example 5 | 452.6 | 489.1 | 56.8 | 57.2 | 206.2 |
| Example 6 | 452.3 | 490 | 55.8 | 56.9 | 205.86 |
| Comparative Example 1 | 451.1 | 486.3 | 53.63 | 46.94 | 178.24 |

From Table 1, it can be seen from Examples 1-6 that the first charge specific capacity of the battery made of the negative electrode composite material shown in this disclosure can reach 452.3 mAh·g⁻¹ or above, the first discharge specific capacity can reach 488.6 mAh·g⁻¹ or above, the capacity retention rate for 100 cycles at room temperature and 0.1C can reach 55.8% or above, the capacity retention rate for 100 cycles at 45°C and 0.1C can reach 56.9% or above, and the discharge specific capacity at room temperature and 1C can reach 205.86 mAh·g⁻¹ or above.

By comparing Examples 1 and 3-4, it can be observed that the ratio of tin source and zinc source could affect the performance of the prepared negative electrode material. By controlling the molar ratio of tin source and zinc source to (0.8-1.2):(0.8-1.2), the negative electrode materials with better performance can be obtained. If the ratio of zinc source is too high, it will reduce the electronic conductivity of the composite material, leading to a decrease in the rate performance of the material. If the ratio of tin source is too high, it will reduce the overall particle strength of the composite material, decrease the compaction of the negative electrode, and reduce the utilization rate of the battery.

From the comparison between Examples 1 and 5-6, it can be observed that the temperature of reduction-sintering could affect the performance of the prepared negative electrode material. By controlling the temperature of reduction-sintering in a range from 640°C to 660°C, negative electrode materials with better performance can be obtained. If the temperature of reduction-sintering is too high, brittle rhombic tin will be generated, reducing the ductility and conductivity of the composite material. If the temperature of reduction-sintering is too low, a uniform and stable carbon shell structure cannot be formed.

From the comparison between Example 1 and Comparative Example 1, it can be seen that in the present disclosure, Si/C/Sn/Zn elements were uniformly mixed to construct a symmetrical conductive structure, thereby improving the conductivity of the silicon-based material, improving the rate performance of the material, and obtaining the negative electrode materials for lithium ion batteries with fast charging ability. Moreover, the technical solution of the present disclosure can alleviate the volume effect of silicon-based materials, and minimize the exposure degree of silicon surfaces as much as possible, thereby reducing irreversible capacity loss. At the same time, the technical solution of the present disclosure can reduce the erosion of HF generated by the electrolyte on the electrode material, suppress the side reactions generated at the interface, and form the optimal SEI film, thereby improving the cycling performance and rate performance of the material.

## Claims

1. A method for preparing a negative electrode composite material, comprising the following steps:
(1) mixing and dissolving a first carbon source and a first dispersant, and preparing carbon balls through a spray drying treatment;
(2) mixing a tin source, a zinc source and a solvent, coating the tin source and the zinc source onto carbon balls through a primary liquid phase coating treatment, and obtaining hollow spherical tin oxide/zinc oxide composite material after an oxidation-sintering treatment;
(3) mixing and dissolving a second carbon source and a second dispersant, forming a carbon layer on the surface of the tin oxide/zinc oxide composite material through a secondary liquid phase coating treatment, and obtaining a precursor material after a reduction-sintering treatment;
(4) introducing a silicon source, depositing silicon into the interior of the precursor obtained in step (3), and obtaining the negative electrode composite material.

2. The method of claim 1, wherein in step (1), the first carbon source comprises any one or a combination of at least two of glucose, sucrose, maltose, fructose and citric acid, the first dispersant comprises any one or a combination of at least two of polyethylene pyrrolidone, polyether P123 and polyether F127, and a molar amount of the first dispersant is in a range from 2% to 4% of a molar amount of the first carbon source.

3. The method of claim 1 or claim 2, wherein the first carbon source after the mixing and dissolving has a solid content ranging from 30% to 50%.

4. The method of any one of claims 1-3, wherein the carbon balls have a median particle size ranging from 4 µm to 6 µm.

5. The method of any one of claims 1-4, wherein in step (2), the tin source comprises any one or a combination of at least two of tin(II) oxalate, tin(IV) nitrate, tin(II) methanesulfonate, and tin(II) ethanesulfonate, the zinc source comprises any one or a combination of at least two of zinc nitrate, zinc carbonate and zinc oxalate, a molar ratio of the zinc source to the tin source is (0.8-1.2): (0.8-1.2), and the total molar amount of the zinc source and the tin source is in a range from 15% to 25% of a molar amount of the carbon balls.

6. The method of any one of claims 1-5, wherein in step (2), the oxidation-sintering is carried out in an oxygen atmosphere at a temperature ranging from 360°C to 380°C for the time ranging from 3 hours to 5 hours.

7. The method of any one of claims 1-6, wherein the tin oxide/zinc oxide composite material has a thickness ranging from 1.5µm to 2.5 µm.

8. The method of any one of claims 1-7, wherein in step (3), the second carbon source comprises any one or a combination of at least two of glucose, sucrose, maltose, fructose, and citric acid, and the second dispersant comprises any one or a combination of at least two of polyethylene pyrrolidone, polyether P123 and polyether F127.

9. The method of any one of claims 1-8, wherein the carbon layer has a thickness ranging from 1.5 µm to 2.5 µm.

10. The method of any one of claims 1-9, wherein in step (3), the reduction-sintering is carried out in a reducing atmosphere, the gas in the reducing atmosphere comprises hydrogen gas, preferably, the gas in the reducing atmosphere also comprises inert gas, the reduction-sintering is carried out at a temperature ranging from 640°C to 660°C for a time ranging from 3 hours to 5 hours.

11. The method of any one of claims 1-10, wherein in step (4), the silicon source comprises silane, the introducing of the silicon source is carried out at a rate ranging from 3 ml/s to 5 ml/s at a temperature ranging from 800°C to 850°C for the time ranging from 15 hours to 25 hours.

12. A negative electrode composite material, prepared by the method of any one of claims 1-11.

13. The negative electrode composite material of claim 12, wherein the negative electrode composite material comprises a tin/zinc composite material with a hollow structure, a carbon shell coated on the surface of the tin/zinc composite material, and silicon which is fully grown on the tin/zinc composite material without completely filling the entire tin/zinc composite material.

14. A negative electrode plate, comprising the negative electrode composite material of claim 13.

15. A lithium-ion battery, comprising the negative electrode plate of claim 14.
